(19) Europäisches Patentamt
European Patent Office
Office européen des brevets

(11) EP 2 919 172 A2

(12) EUROPEAN PATENT APPLICATION

(43) Date of publication:
16.09.2015 Bulletin 2015/38

(51) Int Cl.:
G06N 99/00 (2010.01)   B82Y 10/00 (2011.01)

(21) Application number: 15157517.2

(22) Date of filing: 04.03.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 12.03.2014 GB 201404339

(71) Applicant: Nokia Technologies OY
02610 Espoo (FI)

(72) Inventors:
• Niskanen, Antti
  Cambridge, CB2 9LW (GB)
• Wabnig, Joachim
  Upper Cambourne, CB23 6AX (GB)

(74) Representative: Nokia Corporation
Intellectual Property Department
Karakaari 7
02610 Espoo (FI)

(54) Method and apparatus for adiabatic quantum annealing

(57)     An approach is provided for adiabatic quantum annealing (computing, AQC). There is disclosed a method for finding a solution by using adiabatic quantum annealing. In an embodiment of the method an initial state to an adiabatic quantum computing element is provided and an adiabatic quantum annealing is performed by the adiabatic quantum computing element. The result of the adiabatic quantum annealing is examined to determine whether one or more terminating criteria have been met. If the examining reveals that one or more terminating criteria have been met, returning a candidate solution with the lowest energy. If the examining reveals that one or more terminating criteria have not been met, the method further comprises adjusting the state of the adiabatic quantum computing element; and repeating the adiabatic quantum annealing. The present invention also relates to apparatuses and computer program products for implementing the method and circuitry relating to the adiabatic quantum annealing.

Fig. 1

Printed by Jouve, 75001 PARIS (FR)

**Description**

TECHNOLOGICAL FIELD

The present invention relates generally to adiabatic quantum annealing (computing, AQC). More particularly, the present invention relates to a method for finding a solution by using adiabatic quantum annealing. The present invention also relates to apparatuses and computer program products for implementing the method and circuitry relating to the adiabatic quantum annealing.

BACKGROUND

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Adiabatic quantum annealing is a technology for efficiently finding good solutions to discrete optimization problems. Such problems may be both extremely awkward for digital computers and important. Many cutting-edge artificial intelligence (AI) involves solving such problems.

Adiabatic quantum annealing is a hardware-accelerated method for solving difficult discrete optimization problems. The idea of adiabatic quantum annealing may be adapted to superconducting quantum circuits. Adiabatic quantum annealing is different from other optimization methods in that it may benefit from quantum tunneling to escape from local minima of the objective function.

While quantum tunneling may generally help in finding the ground state it may also introduce new kind of errors due to an effect called Landau-Zener tunneling, which may lead to erroneous output of local minima. In some difficult problems such local minima may not be desirable and may be completely uncorrelated with the actual global minimum. It may be possible to try and overcome local minima by e.g. iteratively adjusting the initial conditions of the machine.

SOME EXEMPLARY EMBODIMENTS

Examples of hardware architecture for discrete optimization and a programming method are provided. Specifically, examples are provided which represent a variant of adiabatic quantum annealing.

An aim is to avoid local minima in adiabatic quantum annealing. Many embodiments may be implemented in superconducting devices, but other physical implementations, e.g. quantum dots are a possibility.

According to one embodiment, a method comprises

providing an initial state to an adiabatic quantum computing element;
performing an adiabatic quantum annealing by the adiabatic quantum computing element;
examining the result of the adiabatic quantum annealing to determine whether one or more terminating criteria have been met;
if the examining reveals that one or more terminating criteria have been met, returning a candidate solution with the lowest energy;
if the examining reveals that one or more terminating criteria have not been met, the method further comprises:

adjusting the state of the adiabatic quantum computing element by adding candidates to a set of penalized states; forming a penalty Hamiltonian; and adjusting an outer product couplings; and
repeating the adiabatic quantum annealing.

According to another embodiment, an apparatus comprises at least one processor, and at least one memory including computer program code, that at least one memory and the computer program code configured to, with the at least one processor, cause an adiabatic quantum computing element to perform at least the following:

provide an initial state to an adiabatic quantum computing element;
perform an adiabatic quantum annealing by the adiabatic quantum computing element;
examine the result of the adiabatic quantum annealing to determine whether one or more terminating criteria have been met;
if the examining reveals that one or more terminating criteria have been met, returning a candidate solution with the lowest energy;
if the examining reveals that one or more terminating criteria have not been met, the at least one memory and the computer program code are further configured to, with the at least one processor, cause the adiabatic quantum computing element to perform at least the following:

adjust the state of the adiabatic quantum computing element by adding candidates to a set of penalized states; forming a penalty Hamiltonian; and adjusting an outer product couplings; and
repeat the adiabatic quantum annealing.

According to another embodiment, a computer-readable storage medium carrying one or more sequences of one or more instructions which, when executed by one or more processors, cause an adiabatic quantum computing element to at least perform the following steps:

provide an initial state to an adiabatic quantum computing element;

perform an adiabatic quantum annealing by the adiabatic quantum computing element;

examine the result of the adiabatic quantum annealing to determine whether one or more terminating criteria have been met;

if the examining reveals that one or more terminating criteria have been met, returning a candidate solution with the lowest energy;

if the examining reveals that one or more terminating criteria have not been met, the computer-readable storage medium carrying one or more sequences of one or more instructions which, when executed by one or more processors, cause the adiabatic quantum computing element to perform at least the following:

adjust the state of the adiabatic quantum computing element by adding candidates to a set of penalized states; forming a penalty Hamiltonian; and adjusting an outer product couplings; and repeat the adiabatic quantum annealing.

According to yet another embodiment, an apparatus comprises:

a set of quantum bits, the quantum bits comprising a control element for setting the state of the quantum bit;
means for providing one or more values for setting the quantum bits to an initial state;
means for enabling the quantum bits to perform adiabatic quantum annealing; and means for reading the result of the adiabatic quantum annealing; and
means for providing couplings between quantum bits of the set of quantum bits and a bus for interfacing with the quantum bits.

According to yet another embodiment, an apparatus comprises:

a set of quantum bits, the quantum bits comprising a control element for setting the state of the quantum bit;
a control input for providing one or more values for setting the quantum bits to an initial state;
a controller for performing adiabatic quantum annealing by the set of quantum bits;
an output for reading the result of the adiabatic quantum annealing;
a bus comprising a superconducting loop for interfacing with the quantum bits; and
a set of couplers between the set of quantum bits and the bus.

Still other aspects, features, and advantages of the invention are readily apparent from the following detailed description, simply by illustrating a number of particular embodiments and implementations

The invention is also capable of other and different embodiments, and its several details can be modified in various obvious respects, all without departing from the spirit and scope of the invention. Accordingly, the drawings and description are to be regarded as illustrative in nature, and not as restrictive.

BRIEF DESCRIPTION OF THE DRAWINGS

The embodiments of the invention are illustrated by way of example, and not by way of limitation, in the figures of the accompanying drawings:

FIG. 1 is an illustration of a structure of a set of qubits and couplers according to an exemplary embodiment;

FIG. 2 is a diagram of some components of a computing apparatus comprising one or more sets of qubits according to an exemplary embodiment;

FIG. 3 is a flowchart of a process for searching a global minimum by utilizing the computing apparatus according to an exemplary embodiment;

FIG. 4 is another diagram of some components of a computing apparatus comprising one or more sets of qubits according to an exemplary embodiment;

FIG. 5 is an illustration of a structure of a set of qubits of an adiabatic quantum annealing processor and some interactions between the qubits;

FIG. 6 depicts a principle of an implementation of superconducting flux qubits according to an exemplary embodiment;

FIG. 7 is an illustration of changing from an initial Hamiltonian to a final problem Hamiltonian with a computationally relevant ground state;

FIG. 8 is an example of an arrangement for communication comprising a plurality of apparatuses, networks and network elements.

DESCRIPTION OF EXAMPLE EMBODIMENTS

In the following description, for the purposes of explanation, some specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Embodiments are provided to show how to implement in hardware a fully connected adiabatic quantum computing architecture with limited tunability optimized for penalizing local minima. An idea is to complement standard adiabatic quantum computing circuitry by adding at least one global coupler circuit with as many tunable parameters as there are qubits. The additional coupling term will have an outer product form and its use is explained below.

Compared to computation by conventional computer, quantum computation is based on quantum information processing by quantum bits (qubit). A qubit can be_in two distinct states_(representing a logical 0 or 1), or in a quantum superposition state. The quantum superposition state means that the state of the qubit is not yet settled, or it can also be imagined that the qubit is in both states 0 and 1 at the same time. The superconducting qubit structure encodes the two states as tiny magnetic fields, which either point up or down. These states can be called, for example, +1 and -1, and they correspond to the two states that the qubit can 'choose' between. Using the quantum mechanics that is accessible with these structures, this object can be controlled so that the qubit can be put into a superposition of these two states. So by adjusting a control knob on a quantum computer, all the qubits can be put into a superposition state where it hasn't yet decided which of those +1, -1 states to be.

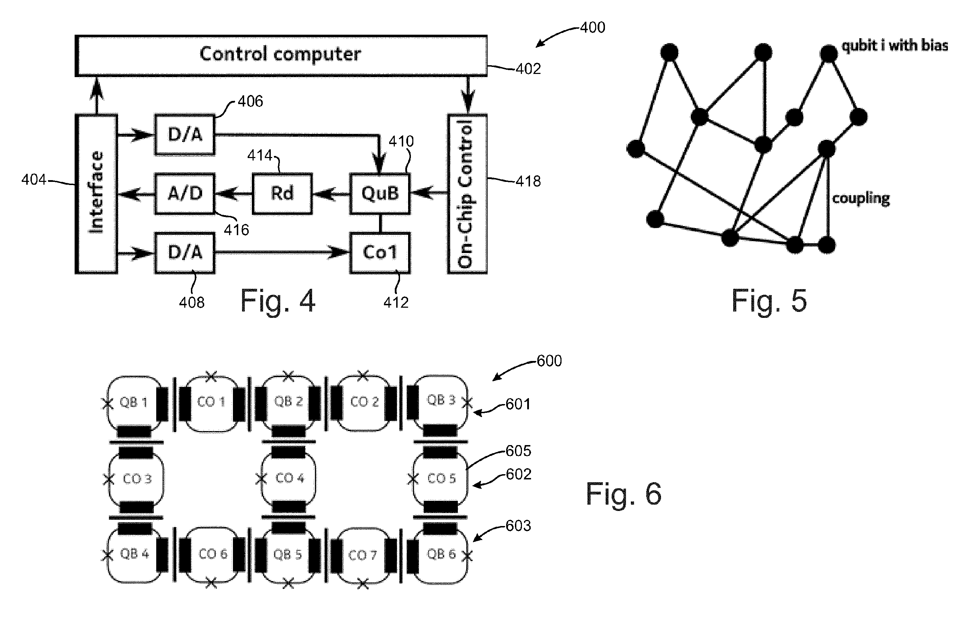

FIG. 5 is a simplified illustration of a structure of a set of qubits of an adiabatic quantum annealing processor and some interactions between the qubits. The basic layout of such adiabatic quantum annealing processor consists of a number of quantum bits (qubits). The energy of the set of qubits may be given by local biases and couplings between qubits. The interactions can be represented as a graph, as illustrated in Figure 5. In some example implementations of the adiabatic quantum annealing processors only adjacent qubits may easily be coupled to each other.

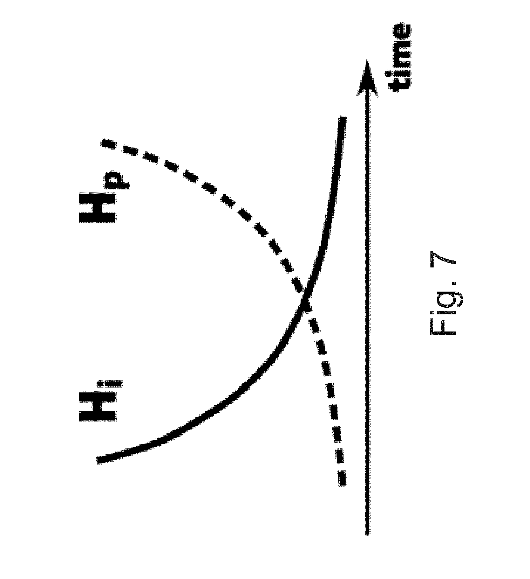

Adiabatic annealing process may consist of continuously changing an initial Hamiltonian $H_i$ with an easily accessible ground state to a final problem Hamiltonian Hp with a computationally relevant ground state. The changeover from one Hamiltonian to the other may be done in such a way that the system remains in the ground state. This is illustrated in Figure 7. An example choice for the initial Hamiltonian $H_i$ is for only local biases that induce a quantum mechanical superposition in the computational basis in the qubits.

FIG. 6 depicts a principle of an implementation 600 of superconducting flux qubits 601 (QB1, QB2, ...) according to an exemplary embodiment. This example implementation of qubits uses superconducting circuits. In a flux qubit the two computational states 0/1 correspond to clockwise / anticlockwise currents in superconducting loops 603. Adjacent loops can be inductively coupled to each other. An example of the coupling is depicted in Figure 6. The inductance of the couplers 602 can be controlled by adjusting the flux in the coupling loops 605 and thus the interaction energy can be controlled. When the qubits have reached their final states, the readout of the final state of the qubits may be achieved e.g. with the help of sensitive magnetometers (SQUIDs, Superconducting Quantum Interference Devices).

An example of initializing an adiabatic quantum optimization device 400 is described with reference to Figure 4. The problem Hamiltonian may be encoded in the biases of individual qubits and the couplings between qubits. These values may be programmed before an annealing run. The biases of the qubits 410 may be programmed from a control computer 402 via an interface 404 and a D/A conversion stage 406 and, respectively, the couplings 412 between the qubits 410 may be programmed from the control computer 402 via the interface 404 and another D/A conversion stage 408. Similarly the final state of the qubits 410 after the annealing run may be read and sent to the control computer 402. This may be achieved e.g. by a state reading unit 414, which may obtain states of the qubits 410 as analog signals. The analog signals may then be converted to digital form by an A/D conversion stage 416. Additionally, the change of parameters during an annealing run may be controlled by an on-chip control unit 418. An annealing run can be initiated on demand from the control computer 402.

All the elements of the apparatus of Figure 4 beside the control computer may be implemented on a single chip using superconducting electronics.

In the following two aspects are discussed in more detail, namely chip architecture and an iterative method for avoiding local minima.

Chip Architecture

According to an example embodiment an adiabatic quantum optimization device may consist of an array of computational elements. Individually, each such element, or quantum bit (qubit), can be in two distinct states, or in a quantum superposition state. The qubits may be individually addressable in two ways. The relative energy of their two different computational states may be adjustable. Also, each qubit's state may be measurable using a quantum measurement device. In order to be able to perform non-trivial computations, the interaction energy of some elements may be adjustable. This is analogous to having a ferromagnetic or antiferromagnetic adjustable coupling between artificial (or real) magnetic dipoles. Collectively, the system can exhibit superpositions of multi-qubit states and entanglement. For instance, the energy eigenstates can be entangled.

Overall, the computational apparatus thus has a total energy function, or a Hamiltonian operator given by

$$H = \sum_{j=1}^{N} h_j \sigma_z^j - \frac{1}{2} \sum_{j,k=1}^{N} J_{jk} \sigma_z^j \sigma_z^k$$

Here $\sigma_x^j$ stands for the Pauli z -matrix and $h_j$ is the associated programmable energy bias of qubit j. The interaction energies are encoded in the programmable coupling matrix $J_{jk}$. Two qubits are coupled in a tunable way if the respective matrix element is both adjustable and non-zero. Note that the matrix defines a graph with weighted and signed edges.

The basic computational principle is to encode a problem of interest in the energy function. The result of the computation is a low energy, or ideally, the lowest energy configuration of the array of qubits given the restrictions set by the adjustable energy terms.

However, achieving this may not be easy. While the physical computational device may be e.g. cryogenically cooled and may sit in a shielded environment, the computer may need an annealing step to find a good solution. To this end, an additional external parameter may be used to adiabatically (slowly) transform the energy function from an initialization Hamiltonian to the target Hamiltonian, as is illustrated in Figure 7.

To achieve the adiabatic quantum annealing, the following time-dependent Hamiltonian may be used.

$$H(t) = \frac{t}{T} H + \frac{t-T}{T} H_I.$$

Here T is the total time for the annealing schedule and $H_I$ is the initial Hamiltonian. It may be, for instance, given by $H_I = \Delta \sum_j^N \sigma_x^j$, where $\sigma_x^j$ is the Pauli x-matrix and $\Delta$ is an energy scale. All of this may be implemented with e.g. superconducting circuits. The qubit energy scales may be, for example, less than 10GHz, while the thermal environment may accordingly be around 10 mK. This may be achieved using e.g. a dilution refrigerator,

One challenge is that the coupling matrix $J_{jk}$ may only be controllable when a complicated coupling circuit is located in the vicinity of the respective qubits. The qubits may form a planar layout, and it is therefore not practical to have N(N-1)/2 such coupling circuits, which would be required for full connectivity. There are, however, some computational tasks in which full connectivity may be desired. In an embodiment a solution is provided by adding an extra global coupler to complement the circuitry.

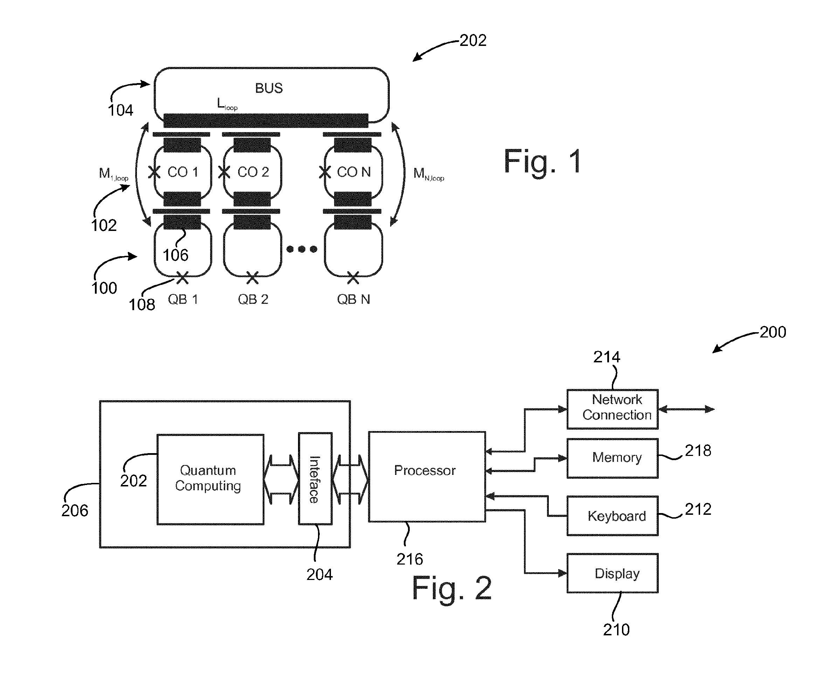

In an embodiment of chip architecture an additional global coupler element is used. This is illustrated in Figure 1. The example of Figure 1 depicts a set 100 of qubits QB1, QB2, ..., QBN. Each qubit is connected to a coupler CO1, CO2, .., CON of a set 102 of couplers. The couplers CO1, CO2, .., CON are further connected to a bus 104 for interfacing with the qubits QB1, QB2, ..., QBN. In this example embodiment the qubits QB1, QB2, ..., QBN comprise an inductor 106 and a Josephson junction 108. There may also be several additional components for operation of the structure (not shown in Figure 1). The qubits and couplers may be surrounded by a framework of switches for both addressing each qubit (e.g. routing pulses of magnetic information to the correct places on the structure) and storing that information in a magnetic memory element.

Figure 2 illustrates an example of a computing device 200 in which the quantum computing circuitry 202 may be utilized. The computing device 200 comprises the quantum computing circuitry 202 having one or more sets 100 of qubits and a corresponding number or couplers 102 for providing coupling between the qubits and the bus 104. There may be more than one bus 104. The bus 104 or buses may be connected to an interface circuitry 204 which comprises means for providing information to the quantum computing circuitry 202 and for obtaining information from the quantum computing circuitry 202. The information to be provided to the quantum computing circuitry 202 may comprise program instructions, initial values for the qubits and/or other data. Information obtained from the quantum computing circuitry 202 may comprise e.g. computation results.

The interface circuitry 204 may comprise *inter alia* analog-to-digital converters and digital-to-analog converters for converting digital values to analog signals (e.g. to currents) and for converting analog signals (e.g. to currents) to digital values, respectively.

The computing device 200 may also comprise a display 210 for displaying information to the user, and a keyboard 212 and/or another input device so that the user may control the operation of the computing device 200 and input parameters, variables etc. to be used by the quantum computing circuitry 202. There may also be communication means 214 for communicating with a communication network such as the internet, a mobile communication network and/or another wireless or wired network.

There may also be provided a processor 216 for controlling the operation of the computing device and the elements of the computing device.

During operation the quantum computing circuitry 202 is cooled down to a temperature in which the elements of the quantum computing circuitry, *inter alia* the qubits, couplers and the bus become superconducting due to the properties of the materials used in producing the elements. The quantum computing circuitry 202 may be installed in a dilution refrigerator 206, for example. The dilution refrigerator 206 may be able to be cooled down to the temperature of a few mK, for example to 20 mK or below.

In the following an example in which flux qubits are used is described in more detail. Similar constructions might also work for quantum dots, superconducting charge qubits, transmon qubits etc. The global coupler 102 may be implemented using e.g. a closed superconducting loop with at least one Josephson junction. The microwave resonances of the global coupler 102 might be designed to be above the relevant energy scales. The coupling matrix may become

$$\tilde{J}_{jk} = -\frac{\mathrm{M}_{j,loop}\,\mathrm{M}_{k,loop}}{L_{loop}}I_j I_k.$$

Here $\mathrm{M}_{j,loop}$ is the effective coupling mutual inductance between the global coupler 102 and qubit j, while $L_{loop}$ is the characteristic self-inductance of the global coupler 102, and $I_j$ is the qubit circulating current. These parameters are all defined by circuit design and the mutual inductances may be tunable. In the current example embodiment it is assumed that $L_{loop}$ is positive and that the mutual inductances are sign and magnitude tunable.

The diagonal elements of the coupling matrix can be defined arbitrarily, which means that the coupling matrix can be written as an outer product of a programmable vector $w$, $\tilde{J} = -Cww^T$. Here C is a positive constant. Clearly the matrix is full, but the tunability of the matrix may be limited as w has only N parameters while a full J would have N(N-1)/2 parameters. Such outer product coupling may be easier to implement than a fully tunable fully connected coupling.

In practice the total coupling matrix will be $J = J_{problem} + \tilde{J}$, where $\tilde{J}$ is specifically implemented with the global coupler 102. However, the ways in which the problem is represented is not limited to a particular implementation.

In an example embodiment the outer product couplings may be used to penalize for any previously discovered local minima. Suppose that the observed samples generated by quantum sampling are denoted by $\vec{s}_j$, j = 0,..., $N_s$ -1, where $N_s$ is the number of observed samples. Here $\vec{s}_0$ is the solution with the smallest energy.

Each $\vec{s}_j$ is a vector whose entries are $\vec{s}_j^k = \pm 1$. Here k=1,...,N. A penalization for some or all of the higher energy solutions may be performed using an outer product coupling matrix of the form

$$J_{pen} = -\frac{C}{N^2}\left(\sum_P \vec{s}_j\right)\left(\sum_P \vec{s}_j\right)^T.$$

This gives rise to the penalty Hamiltonian

$$H_{pen} = -\frac{1}{2}\sum_{j,k=1}^{N} J_{pen,jk}\,\sigma_z^j \sigma_z^k.$$

with

$$J_{pen,jk} = -\frac{\mathrm{M}_{k,loop}\,\mathrm{M}_{l,loop}}{L_{loop}}I_j I_k$$

with the persistent current in qubit j given by $I_j$.

At each repetition of the program these may be set equal to

$$J_{pen} = -\frac{C}{N^2}\left(\sum_P \vec{s}_j\right)\left(\sum_P \vec{s}_j\right)^T,$$

where $\{\vec{s}_J, J = 0,.., N_s - 1\}$ are the solutions in the penalised set.

The programmable mutual inductances are given explicitly by

$$M_{k,loop} = \frac{\sqrt{L_{loop}C}}{NI_k}\sum_P \left(\vec{s}_j\right)_k$$

Here $(\vec{s}_j)_k$ stands for the $k^{th}$ component of the vector, P denotes the set of states penalized and C is the characteristic energy scale. In order for the penalty term to have the desired effect a few assumptions may be made. The states penalized and the lowest energy state should be uncorrelated, and each bit value is approximately equally likely. It may also be assumed that |P|<<N. For any state $\vec{s}_j$ within P an energy shift of approximately $C : \left(\vec{s}_j^T H_{pen}\vec{s}_j\right) = C$ may be obtained. The standard deviation of this quantity is to leading order

$$\frac{\sqrt[2]{|P|-1}}{\sqrt{N}}.$$

A randomly selected state $\vec{s}_R$ is however shifted by $\left(\vec{s}_R^T H_{pen}\vec{s}_R\right) = \frac{C|P|}{N}$, which is small compared to the penalty. The standard deviation of the penalty on random states is $\sqrt{\left(\Delta\left(\vec{s}_R^T H_{pen}\vec{s}_R\right)\right)} \approx \frac{C\sqrt{2}|P|}{N}$, which is also negligible compared to C. It may thus be clear that one can reasonably use outer product coupling hamiltonians for penalizing local minima. The penalized states will be shifted by $C \pm \dfrac{\sqrt[2]{|P|-1}}{\sqrt{N}}$, while randomly selected uncorrelated states, such as the global minimum will be shifted only by $\dfrac{C|P|}{N} \pm \dfrac{C\sqrt{2}|P|}{N}$.

Iterative algorithm

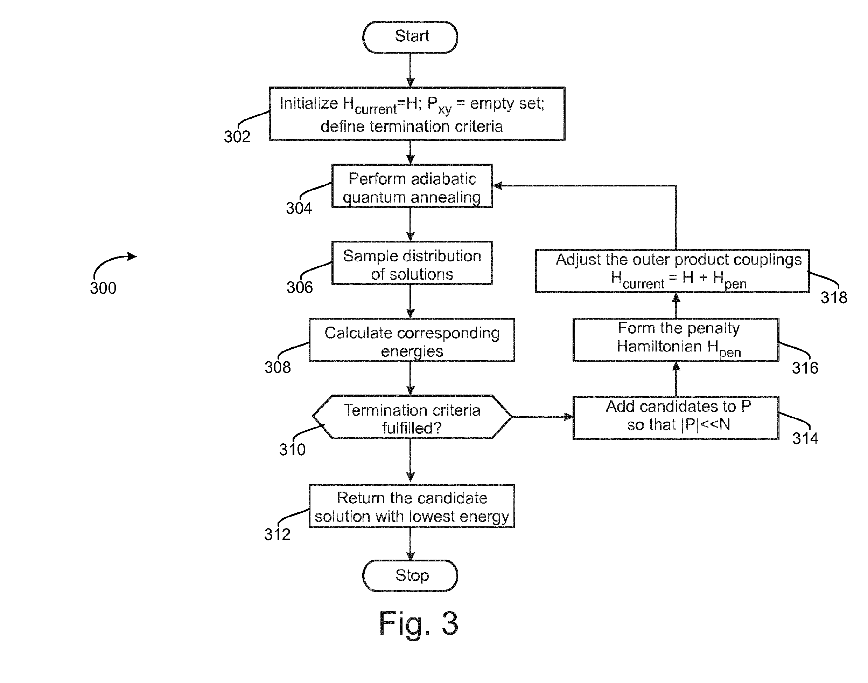

In the following an example of an iterative algorithm 300 is described in more detail with reference to Figure 3. The iterative algorithm can be used to iteratively find better solutions to optimization problems. An assumption in this algorithm is that the adiabatic optimization fails to produce the correct ground state and that the obtained states P only contain local minima.

To initialize 302, $H_{current}$=H and $P_{by}$ is an empty set. One or more termination criteria are also defined. The problem $\vec{s}$ = argmin($H_{current}$) may be tried to be solved by sampling 306 from the distribution of solutions generated by adiabatic quantum annealing 304. The set of candidate solutions is $\{\vec{s_j}, j = 1,...,N_s\}$. Corresponding energies may be calculated 308 using H. Then, the termination criteria may be checked 310. If the termination criteria are fulfilled, the candidate solution with the lowest energy may be returned 312. If the termination criteria are not fulfilled, the following operations may be performed.

The candidates are added 314 to P in such a way that only the most frequently observed ones are included so that |P|<<N. The penalty Hamiltonian $H_{pen}$ may then be formed 316, and the outer product couplings may be adjusted 318 only such that the new problem becomes $H_{current}$=H+$H_{pen}$. The algorithm may then be continued from the step 304 above in which the problem $\vec{s}$ = argmin($H_{current}$) was attempted to be solved.

The operations may be repeated e.g. until the solution is found in which the termination criteria are met, or if another termination condition is fulfilled, if any. In other words, results of one or more runs of the algorithm may be examined and that result which has the lowest energy may be selected to be the correct solution.

There are many ways to select the termination criteria. For instance, one can choose a required objective function value and/or maximum number of iterations. Similarly, if the algorithm converges to an answer can be used as a termination trigger.

The term computer-readable medium is used herein to refer to any medium that participates in providing information to processor 216, including instructions for execution. Such a medium may take many forms, including, but not limited to, non-volatile media, volatile media and transmission media. Non-volatile media include, for example, optical or magnetic disks, such as storage device. Volatile media include, for example, dynamic memory218. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Embodiments of the present invention may be implemented in software, hardware, application logic or a combination of software, hardware and application logic. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted in Figures 2 and 4. A computer-readable medium may comprise a computer-readable storage medium that may be any media or means that can contain or store the instructions for use by or in connection with an instruction execution system, apparatus, or device, such as a computer.

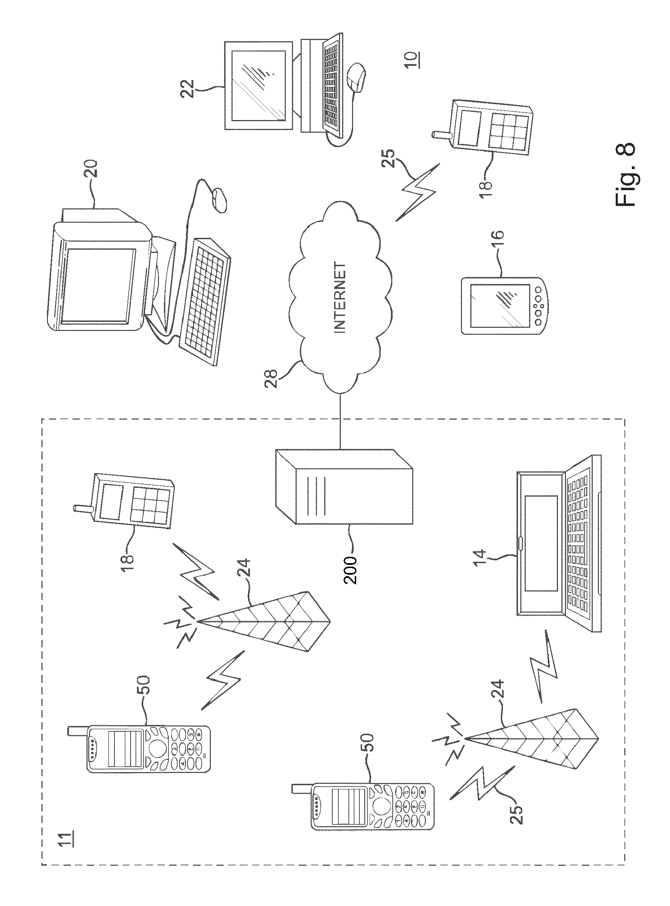

With respect to Figure 8, an example of a system within which embodiments of the present invention can be utilized is shown. The system 10 comprises multiple communication devices which can communicate through one or more networks with the computing device 200. the communication devices may provide operating instructions, parameters, algorithms etc. to the use of the computing device 200 and receive calculation results from the computing device 200.

The system 10 may comprise any combination of wired and/or wireless networks including, but not limited to a wireless cellular telephone network (such as a GSM, UMTS, CDMA network etc.), a wireless local area network (WLAN) such as defined by any of the IEEE 802.x standards, a Bluetooth personal area network, an Ethernet local area network, a token ring local area network, a wide area network, and the Internet, to communicate with the computing device 200. However, the computing device 200 may not need any communication connection to a communication network wherein the computing device 200 may be controlled and operated locally by the user interface.

For example, the system shown in Figure 8 shows a mobile telephone network 11 and a representation of the internet 28. Connectivity to the internet 28 may include, but is not limited to, long range wireless connections, short range wireless connections, and various wired connections including, but not limited to, telephone lines, cable lines, power lines, and similar communication pathways.

The example communication devices shown in the system 10 may include, but are not limited to, an electronic device or apparatus 50, a combination of a personal digital assistant (PDA) and a mobile telephone 14, a PDA 16, an integrated messaging device (IMD) 18, a desktop computer 20, a notebook computer 22. The apparatus 50 may be stationary or mobile when carried by an individual who is moving. The apparatus 50 may also be located in a mode of transport including, but not limited to, a car, a truck, a taxi, a bus, a train, a boat, an airplane, a bicycle, a motorcycle or any similar suitable mode of transport.

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. A method comprising:

   providing an initial state to an adiabatic quantum computing element;
   performing an adiabatic quantum annealing by the adiabatic quantum computing element;
   examining the result of the adiabatic quantum annealing to determine whether one or more terminating criteria have been met;
   if the examining reveals that one or more terminating criteria have been met, returning a candidate solution with the lowest energy;
   if the examining reveals that one or more terminating criteria have not been met, the method further comprises:

      adjusting the state of the adiabatic quantum computing element by adding candidates to a set of penalized states; forming a penalty Hamiltonian; and adjusting an outer product couplings; and
      repeating the adiabatic quantum annealing.

2. The method of claim 1, wherein the examining comprises:

   sampling distribution of solutions of the adiabatic quantum annealing;
   calculating corresponding energies of the distribution of solutions;

3. The method of claim 1 or 2, wherein the penalty Hamiltonian is $H_{pen} = -\frac{1}{2}\sum_{j,k=1}^{N} J_{pen,jk}\,\sigma_z^j\,\sigma_z^k$. with

$$J_{pen,jk} = -\frac{M_{k,loop}\,M_{l,loop}}{L_{loop}}\,I_j\,I_k \quad \text{with}$$

the persistent current in qubit j given by $I_j$.

4. The method according to any of the claims 1 to 3, wherein the providing an initial state comprises:

   providing an initial Hamiltonian by

$$H_l = \Delta\sum_{j}^{N}\sigma_x^j,$$

   where $\sigma_x^j$ is the Pauli x-matrix and $\Delta$ is an energy scale.

5. The method according to any of the claims 1 to 4, wherein at each repetition the method comprises setting

$$J_{pen} = -\frac{c}{N^2}\left(\sum_P \vec{s_j}\right)\left(\sum_P \vec{s_j}\right)^T, \text{ where } \{\vec{s_J},\ J = 0,...,$$

$N_s$ - 1} are the solutions in the penalised set.

6. An apparatus configured to:

provide an initial state to an adiabatic quantum computing element;
perform an adiabatic quantum annealing by the adiabatic quantum computing element;
examine the result of the adiabatic quantum annealing to determine whether one or more terminating criteria have been met;
if the examining reveals that one or more terminating criteria have been met, returning a candidate solution with the lowest energy;
if the examining reveals that one or more terminating criteria have not been met, the at least one memory and the computer program code are further configured to, with the at least one processor, cause the adiabatic quantum computing element to perform at least the following:

adjust the state of the adiabatic quantum computing element by adding candidates to a set of penalized states; forming a penalty Hamiltonian; and adjusting an outer product couplings; and
repeat the adiabatic quantum annealing.

7. The apparatus of claim 6, wherein the adiabatic quantum computing element is configured to:

sample distribution of solutions of the adiabatic quantum annealing; and
calculate corresponding energies of the distribution of solutions.

8. The apparatus of claim 6 or 7, wherein the penalty Hamiltonian is $H_{pen} = -\frac{1}{2}\sum_{j,k=1}^{N} J_{pen,jk}\sigma_z^j \sigma_z^k.$

with $J_{pen,jk} = -\frac{M_{k,loop}\,M_{l,loop}}{L_{loop}}I_j I_k$

with the persistent current in qubit j given by $I_j$..

9. The apparatus according to any of the claims 6 to 8, wherein the adiabatic quantum computing element configured to provide an initial state is further configured to:

provide an initial Hamiltonian by

$$H_I = \Delta \sum_{j}^{N} \sigma_x^j,$$

where $\sigma_x^j$ is the Pauli x-matrix and $\Delta$ is an energy scale.

10. The apparatus according to any of the claims 6 to 9, wherein the adiabatic quantum computing element is configured to set $J_{pen} = -\frac{C}{N^2}\left(\sum_P \vec{s_j}\right)\left(\sum_P \vec{s_j}\right)^T$,

where $\{\vec{s_J},\ J = 0,..,N_s$ - 1} are the solutions in the penalised set.

11. A computer-readable storage medium carrying one or more sequences of one or more instructions which, when executed by one or more processors, cause an adiabatic quantum computing element to at least perform the following steps:

provide an initial state to an adiabatic quantum computing element;
perform an adiabatic quantum annealing by the adiabatic quantum computing element;
examine the result of the adiabatic quantum annealing to determine whether one or more terminating criteria have been met;
if the examining reveals that one or more terminating criteria have been met, returning a candidate solution with the lowest energy;
if the examining reveals that one or more terminating criteria have not been met, the computer-readable storage medium carrying one or more sequences of one or more instructions which, when executed by one or more processors, cause the adiabatic quantum computing element to perform at least the following:

adjust the state of the adiabatic quantum computing element by adding candidates to a set of penalized states; forming a penalty Hamiltonian; and adjusting an outer product couplings; and
repeat the adiabatic quantum annealing.

12. The computer-readable storage medium of claim 11 carrying one or more sequences of one or more instructions which, when executed by one or more processors, cause an adiabatic quantum computing element to:

sample distribution of solutions of the adiabatic quantum annealing; and
calculate corresponding energies of the distribution of solutions.

13. The computer-readable storage medium of claim 11 or 12, wherein the penalty Hamiltonian is

$H_{pen} = -\frac{1}{2}\sum_{j,k=1}^{N} J_{pen,jk}\sigma_z^j \sigma_z^k.$    with

$J_{pen,jk} = -\frac{M_{k,loop}\,M_{l,loop}}{L_{loop}}I_j I_k$    with the persistent current in qubit j given by $I_j$..

14. The computer-readable storage medium according to any of the claims 11 to 13 carrying one or more sequences of one or more instructions which, when executed by one or more processors, cause an adiabatic quantum computing element to provide an initial state by:

> providing an initial Hamiltonian *by $H_I$*

> where $\sigma_x^j$ is the Pauli x-matrix and $\Delta$ is an energy scale.

15. The computer-readable storage medium according to any of the claims 11 to 14 carrying one or more sequences of one or more instructions which, when executed by one or more processors, cause an adiabatic quantum computing element to set

$$J_{pen} = -\frac{C}{N^2}\left(\sum_P \vec{s_j}\right)\left(\sum_P \vec{s_j}\right)^T,$$ where $\{\vec{s}_J, J = 0,..,$

$N_s$ - 1} are the solutions in the penalised set.

Fig. 1

Fig. 2

EP 2 919 172 A2

Start

Initialize $H_{current}=H$; $P_{xy}$ = empty set;
define termination criteria

302

Perform adiabatic
quantum annealing

304

300

Sample distribution
of solutions

306

Adjust the outer product couplings
$H_{current} = H + H_{pen}$

318

Calculate corresponding
energies

308

Form the penalty
Hamiltonian $H_{pen}$

316

Termination criteria
fulfilled?

310

Add candidates to P
so that |P|<<N

314

Return the candidate
solution with lowest energy

312

Stop

Fig. 3

12

Fig. 4

Fig. 5

Fig. 6

EP 2 919 172 A2

Fig. 7

Fig. 8